# EUROPEAN PATENT SPECIFICATION

(11) **EP 1 464 675 B1**
(45) Date of publication and mention of the grant of the patent: **23.07.2014**
(21) Application number: 04251977.7
(22) Date of filing: 01.04.2004
(51) Int. Cl.: C08L 83/04, C08K 3/26, C08K 5/5425, C08K 5/544, C08K 5/5435

(54) **Use of room temperature curable organopolysiloxane compositions for sealing double-glazed panes**
Verwendung von RTV-Organopolysiloxanzusammensetzungen als Dichtungsmittel für Doppelverglassung
Usage de compositions RTV-organopolysiloxanes pour scellement de doubles vitrages

(30) Priority: 01.04.2003 JP 2003097661
(43) Date of publication of application: 06.10.2004
(73) Proprietor: Shin-Etsu Chemical Co., Ltd., Chiyoda-ku, Tokyo (JP)
(72) Inventor: Kimura, Tsuneo, Matsuida-machi Usui-gun Gunma-ken (JP)
(74) Representative: Stoner, Gerard Patrick

(56) References cited:
- EP-A- 0 540 040
- EP-A- 1 104 787
- EP-A- 1 302 512
- US-A- 5 130 401

## Description

### BACKGROUND

### Technical Field

This invention relates to room temperature curable organopolysiloxane compositions which have low environmental impact and excellent sealing properties, used as sealing materials for double-glazed panes.

### Background

For joints between concrete walls and sashes or frames and in the periphery of glass panes in various buildings, sealing materials such as synthetic rubber materials are generally applied to fill the joint cavity. A variety of sealing materials are known to the art including silicone, polysulfide, modified silicone, polyurethane, acrylic resin, SBR, and butyl rubber based materials. From the standpoints of adhesion, heat and weather resistance, and durability, condensation curing silicone sealing materials are widely used. Of these, polysulfide and modified silicone based materials are used for joining double-glazed glass panes in industrial and residential buildings, because of moisture impermeability and rapid cure. For double-glazed glass panes in commercial buildings which need longevity, silicone based sealing materials having better weather resistance are used. Among silicone based sealing materials, two-pack compositions are typically used because rapid cure is required. As to the cure type, two-package silicone based sealing compositions of alcohol-release cure type are used.

However, after double-glazed glass panes are glazed in the factory using two-pack silicone based sealing compositions of alcohol-release cure type, they are attached in actual buildings using silicone based sealing compositions of aminoxy-release cure type. The methanol released from the alcohol-release cure composition upon curing has deleterious effect on the cure of the aminoxy-release cure composition, leaving concerns about adhesion, sealing properties and adhesion durability.

For sealing double-glazed panes, it would be desirable to use a room temperature curable organopolysiloxane composition which does not inhibit curing of aminoxy-release cure silicone based sealing materials used as waterproof seal and which exhibits good adhesion in the presence of hot water and adhesion durability when coated or filled in joints and heated in the presence of moisture.

Attempting to develop an adhesive sealing material under the above-mentioned circumstances, the inventors have discovered that a two-package silicone base sealing composition comprising a vinyloxysilane or a partial hydrolytic condensate thereof as a crosslinker, calcium carbonate as a filler, and a specific combination of silane coupling agents causes no aminoxy-cure inhibition and exhibits good adhesion in the presence of hot water.

For simplicity's sake, the term "room temperature curable" is abbreviated as RTV because it has the same meaning as room temperature vulcanizable. This is well known.

RTV organopolysiloxane compositions described herein, when cured, have been found not to release active hydroxyl group-bearing compounds such as methanol, ketoxime and acetic acid that can inhibit other silicone compositions from curing. They have good adhesion in the presence of hot water and adhesion durability when coated or filled in joints and heated in the presence of moisture. They are thus useful as sealing materials for double-glazed glass panes.

JP-A 5-117529 and JP-A 6-25532 (EP-A-0540040) disclose RTV compositions having water-resistant adhesion to glass substrates. The reaction product of aminoalkylalkoxysilane and epoxyalkylalkoxysilane is used to crosslink and enhance adhesion. These compositions rely on a cure system using a catalyst containing tin or a similar metal as a curing catalyst. JP-A 5-194857 describes an RTV silicone composition exhibiting improved adhesion upon water immersion. This composition uses a tetrafunctional silane as a crosslinker and is not fully satisfactory as a sealant. JP-A 11-209620 discloses an RTV organopolysiloxane composition comprising calcium carbonate treated with a specific agent, but refers nowhere to the adhesive aid specified below as component (E) in the present invention. JP-A 2001-152020 (EP-A-1104787) describes an RTV organopolysiloxane composition comprising two types of calcium carbonate, but uses a different type of polymer from the present invention. Reference is also made to JP-A 61-34063 (USP 4,563,498), JP-A 3-17158, JP-A 6-73293, JP-A 6-179818, JP-A 63-137958, JP-A 6-157910, JP-A 10-168320, and JP-A 2000-319632 although they do not teach the present invention.

US-A-4180642 describes RTV organopolysiloxane compositions able to be stored as one-pack compositions in air-tight vessels, including a vinyloxy-containing silane and an organosilane or siloxane containing guanidyl groups. Adhesion to metal substrates is described. Various fillers may be used; preferably fumed silica but optionally calcium carbonate. Carbon-functional silanes are disclosed as optional adhesion improvers.

US-A-4602078 describes adhesive RTV silicones of two-pack type with adhesion to glass, aluminium and concrete under wet conditions. Catalyst is metal (or organometal) salt of carboxylic acid. Adhesion is enhanced by including an aminoalkylalkoxysilane and epoxyalkylalkoxysilane.

The present invention provides the use, for sealing double-glazed panes, of a room temperature-curable organopolysiloxane composition comprising
(A) 100 parts by weight of diorganopolysiloxane capped with a hydroxyl group at both ends of the molecular chain,
(B) 5 to 500 parts by weight of calcium carbonate,
(C) 0.5 to 20 parts by weight of vinyloxysilane having the general formula (2): 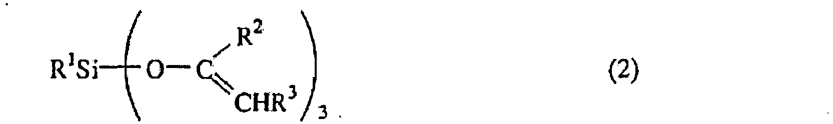 wherein R¹ is substituted or unsubstituted monovalent hydrocarbon group, R² and R³ are each hydrogen or substituted or unsubstituted monovalent hydrocarbon group, or a partial hydrolytic condensate of such vinyloxysilane;
(D) 0.01 to 10 parts by weight of metal-free curing catalyst selected from amine compounds and salts thereof, quaternary ammonium salts, dialkylhydroxylamines and guanidyl-containing silanes and siloxanes, and
(E) 0.1 to 20 parts by weight of a mixture and/or reaction product of a silane coupling agent having a primary amino group and a silane coupling agent having a group selected from epoxy, acrylic and methacrylic groups.

In a further aspect (claim 10) the invention provides a double-glazed glass pane sealed with an organopolysiloxane composition as defined above.

### FURTHER EXPLANATIONS; OPTIONS AND PREFERENCES

### Component A

Component (A) of the composition is a diorganopolysiloxane capped with a hydroxyl group at both ends of its molecular chain, preferably having the following general formula (1).

HO(R₂SiO)ₙH (1)

In the formula, R is independently selected from C₁₋₂₀ alkyl groups, C₂₋₂₀ alkenyl groups, C₆₋₂₀ aryl groups and substituted forms of the foregoing groups in which some hydrogen atoms are substituted with halogen atoms. Suitable alkyl groups include methyl, ethyl, propyl and cyclohexyl. Suitable alkenyl groups include vinyl and allyl. A typical aryl group is phenyl. A typical halogenated group is 3,3,3-trifluoropropyl. Of these, methyl is most preferred. The subscript n is desirably such a number that the diorganopolysiloxane may have a viscosity at 25°C in the range of 100 to about 100,000 mPa·s, preferably 300 to about 50,000 mPa·s.

As described just above, the diorganopolysiloxane (A) preferably has a viscosity at 25°C in the range of 100 to about 100,000 mPa·s, more preferably 300 to about 50,000 mPa·s. With too low a viscosity, the cured composition may have a reduced elongation, failing to provide satisfactory rubber physical properties. With too high a viscosity, the composition may become too viscous to work.

### Component B

Component (B) is calcium carbonate serving as a filler. Examples of the calcium carbonate include colloidal calcium carbonate and heavy calcium carbonate. Use of colloidal calcium carbonate alone is advantageous from the standpoint of adhesion. Colloidal calcium carbonate may or may not have been surface treated with surface treating agents such as organic acids, resin acids, organic acid esters, resin acid esters, paraffin, silanes, siloxanes, and silazanes, although surface treated colloidal calcium carbonate is preferred. Preferably the colloidal calcium carbonate has a specific surface area of at least 10 m²/g, more preferably 15 to 50 m²/g,

From considerations of working efficiency and physical properties, heavy calcium carbonate, preferably having a specific surface area of at least 0.5 m²/g, may be used in combination with the colloidal calcium carbonate. Also the heavy calcium carbonate may or may not have been surface treated with surface treating agents as listed above. Like the colloidal calcium carbonate, surface treated heavy calcium carbonate is preferred.

In the practice of the invention, colloidal calcium carbonate and heavy calcium carbonate are preferably combined in a weight ratio between 100:0 and 50:50.

Component (B) is used in an amount of 5 to 500 parts by weight, preferably 20 to 250 parts by weight per 100 parts by weight of component (A). Less than 5 parts by weight of component (B) fails to provide satisfactory rubber physical properties whereas compositions containing more than 500 parts by weight of component (B) become extremely thixotropic and difficult to work.

### Component C

Component (C) is a vinyloxysilane or substituted vinyloxysilane having the general formula (2) or a partial hydrolytic condensate thereof, serving as a crosslinker in the composition. 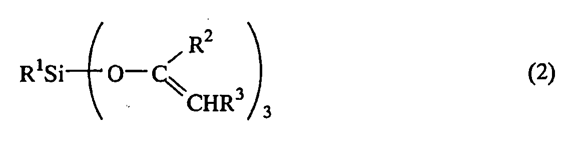 Herein R¹ is a substituted or unsubstituted monovalent hydrocarbon group. Suitable monovalent hydrocarbon groups are those of 1 to 12 carbon atoms, preferably 1 to 6 carbon atoms. Examples include alkyl groups such as methyl, ethyl, propyl, isopropyl, butyl, isobutyl, tert-butyl, pentyl, neopentyl, hexyl, heptyl, octyl, nonyl and decyl, cycloalkyl groups such as cyclopentyl, cyclohexyl, and cycloheptyl, aryl groups such as phenyl, tolyl, xylyl, and naphthyl, aralkyl groups such as benzyl, phenylethyl and phenylpropyl, and substituted forms of these groups in which one or some or all of the hydrogen atoms are substituted with halogen atoms (e.g., fluoro, chloro, bromo) such as chloromethyl, bromoethyl, chloropropyl, trifluoropropyl, and 3,3,4,4,5,5,6,6,6-nonafluorohexyl. Of these, methyl, ethyl, vinyl and phenyl are preferred, with vinyl and phenyl being most preferred.

R² and R³ are each independently selected from hydrogen and substituted or unsubstituted monovalent hydrocarbon groups, examples of which are as exemplified for R¹.

Illustrative of the vinyloxysilane (C) are isopropenoxysilanes such as methyltriisopropenoxysilane, ethyltriisopropenoxysilane, vinyltriisopropenoxysilane, and phenyltriisopropenoxysilane, and partial hydrolytic condensates thereof. Of these, vinyltriisopropenoxysilane and phenyltriisopropenoxysilane are most preferred.

Component (C) is used in an amount of 0.5 to 20 parts by weight, preferably 1 to 15 parts by weight per 100 parts by weight of component (A). Less than 0.5 parts by weight of component (C) induces insufficient crosslinking to provide a cured composition having desired rubber elasticity. With more than 20 parts by weight of component (C), a cured composition is likely to detract from mechanical properties.

### Component D

Component (D) is a curing catalyst for promoting the reaction of component (A) with component (C). The catalyst is selected from amine compounds and salts thereof such as hexylamine, dodecylamine phosphate, tetramethylguanidine, and diazabicyclononane; quaternary ammonium salts such as benzyl triethylammonium acetate; dialkylhydroxylamines such as dimethylhydroxylamine and diethylhydroxylamine; and guanidyl-containing silanes or siloxanes such as tetramethylguanidylpropyltrimethoxysilane, tetramethylguanidylpropylmethyldimethoxysilane, and tetramethylguanidylpropyltris(trimethylsiloxy)silane. Of these, preferred are amine compounds such as tetramethylguanidine and diazabicyclononane and guanidyl-containing silanes or siloxanes such as tetramethylguanidylpropyltrimethoxysilane, tetramethylguanidylpropylmethyldimethoxysilane, and tetramethylguanidylpropyltris(trimethylsiloxy)silane. These compounds may be used alone or in admixture of two or more.

Component (D) is used in an amount of 0.01 to 10 parts by weight, preferably 0.05 to 5 parts by weight per 100 parts by weight of component (A). Outside the range, less amounts of component (D) fail to provide satisfactory cured properties whereas excessive amounts of component (D) may induce too rapid cure, reducing a working time.

Metal- or tin-containing catalyst is not used.

### Component E

Component (E) is a mixture and/or reaction product of a silane coupling agent having a primary amino group and a silane coupling agent having a group selected from epoxy, acrylic and methacrylic groups, with the reaction product being preferred.

Examples of the silane coupling agent having a primary amino group include aminopropyltrimethoxysilane, aminopropyltriethoxysilane, N-β-(aminoethyl)-γ-aminopropyltrimethoxysilane, and N-β-(aminoethyl)-γ-aminopropyltriethoxysilane. Examples of the silane coupling agent having an epoxy group include β -(3,4-epoxycyclohexyl)ethyltrimethoxysilane, glycidoxypropyltrimethoxysilane, glycidoxypropylmethyldiethoxysilane, glycidoxypropyltriisopropenoxysilane, and glycidoxypropylmethyldiisopropenoxysilane. Examples of the silane coupling agent having an acrylic or methacrylic group include acryloxypropyltrimethoxysilane and methacryloxypropyltrimethoxysilane.

The silane coupling agent having a primary amino group and the silane coupling agent having an epoxy, acrylic or methacrylic group are preferably mixed in a weight ratio between 1:4 and 4:1, especially between 1:2 and 2:1.

With respect to the method and conditions for the reaction of the silane coupling agent having a primary amino group with the silane coupling agent having an epoxy, acrylic or methacrylic group, these agents may be mixed, preferably in an inert gas, and reacted at room temperature to 150°C.

Component (E) is used in an amount of 0.1 to 10 parts by weight, preferably 0.2 to 5 parts by weight per 100 parts by weight of component (A). Less than 0.1 part by weight of component (E) usually gives insufficient adhesion whereas more than 10 parts by weight is uneconomical.

### Silicone resin

A silicone resin is preferably incorporated in the RTV organopolysiloxane composition. Examples of the silicone resin include methylsilicone resin, methylvinylsilicone resin, methylphenylsilicone resin, and methylphenylvinylsilicone resin, with the methylsilicone resin and methylvinylsilicone resin being preferred. The silicone resin is preferably compounded in an amount of 0.5 to 30 parts by weight, more preferably 1 to 20 parts by weight per 100 parts by weight of component (A). The use of silicone resin is effective for improving water-resistant adhesion.

### Other components

In addition to the above-described components, fillers, additives, catalysts and the like may be added to the RTV organopolysiloxane composition, according to the skilled person's practice and in line with the intended use. Suitable fillers include fumed silica, wet silica and precipitated silica, which may or may not have been surface treated, metal oxides, metal hydroxides, glass beads, glass balloons, resin beads, resin balloons and the like. Suitable additives include polyethers as thixotropic agents, and silicone oil and isoparaffin as plasticizers. Mildew-proofing agents and anti-microbial agents may be added if necessary.

### Preparation

The RTV organopolysiloxane composition is preferably formulated into a two-package system. For the two-package system, component (C) serving as crosslinker and component (D) serving as catalyst should be kept separate. For example, one package is a mixture of components (A) to (C) and another package is a mixture of components (D) and (E). On use, these two packages are mixed.

When the two packages are mixed to form a sealing material, mixing is desirably done under a reduced pressure, typically a vacuum lower than -30 cmHg, in order to remove the bubbles that can be entrained in the sealing material. Any well-known mixer for sealing materials may be used to this end. It is also possible to discharge the two packages from their containers by means of an extruder, and mix the extrudates in a dynamic or static mixer prior to dispensing.

Since the present RTV organopolysiloxane compositions release no active hydroxyl group-bearing compounds such as methanol, ketoxime and acetic acid upon curing, they do not inhibit other silicone compositions from curing. The composition forms an effective seal and exhibits good adhesion in the presence of hot water and adhesion durability when coated or filled in joints and heated in the presence of moisture. The composition is used as sealing material for double-glazed glass panes. Because of the lack of cure inhibition, the composition is especially advantageous when it is desired to apply an aminoxy base sealing material onto a seal of the present composition to form a water-proof seal thereon.

### EXAMPLE

Examples are given below, by way of illustration and not by way of limitation.

### Example 1

A base compound was prepared by intimately mixing 100 parts by weight of a hydroxyl end-capped dimethylpolysiloxane having a viscosity of 700 mPa·s, 10 parts by weight of a silicone resin consisting of trimethylsiloxy units and SiO₂ units, and 120 parts by weight of colloidal calcium carbonate surface treated with rhodinic acid (specific surface area 20 m²/g), adding 4 parts by weight of vinyltriisopropenoxysilane, and mixing in vacuo until uniform. To 234 parts by weight of the base compound were added 1.0 part by weight of tetramethylguanidine, 1.0 part by weight of γ-aminopropyltriethoxysilane and 1.0 part by weight of γ-glycidoxypropyltrimethoxysilane. The ingredients were mixed in vacuo until uniform, yielding a composition.

### Example 2

A composition was prepared as in Example 1 except that 1.0 part by weight of tetramethylguanidylpropyltrimethoxysilane was used instead of 1.0 part by weight of tetramethylguanidine, and 2.0 parts by weight of the reaction product of β-aminoethylaminopropyltrimethoxysilane with γ-methacryloxypropyltrimethoxysilane was used instead of 1.0 part by weight of γ-aminopropyltriethoxysilane and 1.0 part by weight of γ-glycidoxypropyltrimethoxysilane.

### Example 3

A composition was prepared as in Example 1 except that 100 parts by weight of colloidal calcium carbonate surface treated with rhodinic acid (specific surface area 20 m²/g) and 50 parts by weight of heavy calcium carbonate surface treated with paraffin (specific surface area 0.9 m²/g) were used instead of 120 parts by weight of colloidal calcium carbonate surface treated with rhodinic acid (specific surface area 20 m²/g) .

### Example 4

A composition was prepared as in Example 1 except that the silicone resin was omitted.

### Comparative Example 1

A composition was prepared as in Example 1 except that 4 parts by weight of tetramethoxysilane was used instead of 4 parts by weight of vinyltriisopropenoxysilane, and 1.0 part by weight of dioctyltin dilaurate was used instead of 1.0 part by weight of tetramethylguanidine.

### Comparative Example 2

A composition was prepared as in Example 1 except that 1.0 part by weight of dioctyltin dilaurate was further added.

Tests were performed on the compositions obtained in Examples 1 to 4 and Comparative Examples 1 and 2. Using the composition and float glass, H-shape blocks were prepared according to JIS A-1439. The composition was cured for 7 days in an atmosphere of 23±2°C and 50±5% RH, after which rubber physical properties were measured. The block was immersed for 50 days in a thermostat water tank at 80°C, after which a change of adhesion was examined. Separately, each composition was cast in a joint cavity of 10 mm wide and 10 mm deep between aluminum members, to a depth of 5 mm from the bottom, and cured for 3 days in an atmosphere of 23±2°C and 50±5% RH. On the thus cured composition in the joint cavity, Sealant 70 (aminoxy sealant by Shin-Etsu Chemical Co., Ltd.) was applied to a filling depth of 5 mm, and cured for 7 days. The double seal was cut by means of a cutter, and the section was visually observed to inspect any cure inhibition at the interface between the composition and Sealant 70.

The formulation and test results of Examples 1 to 4 and Comparative Examples 1 and 2 are shown in Table 1.

**Table 1**

| Formulation (pbw) | | Example | | | | Comparative Example | |
|---|---|---|---|---|---|---|---|
| | | 1 | 2 | 3 | 4 | 1 | 2 |
| Dimethylpolysiloxane | | 100 | 100 | 100 | 100 | 100 | 100 |
| Silicone resin | | 10 | 10 | 10 | | 10 | 10 |
| Colloidal calcium carbonate | | 120 | 120 | 100 | 120 | 120 | 120 |
| Heavy calcium carbonate | | | | 50 | | | |
| Vinyltriisopropenoxysilane | | 4 | 4 | 4 | 4 | | 4 |
| Tetramethoxysilane | | | | | | 4 | |
| Tetramethylguanidine | | 1.0 | | 1.0 | 1.0 | | 1.0 |
| Tetramethylguanidylpropyl trimethoxysilane | | | 1.0 | | | | |
| Dioctyltin dilaurate | | | | | | 1.0 | 1.0 |
| KBE903 | | 1.0 | | 1.0 | 1.0 | 1.0 | 1.0 |
| KBM403 | | 1.0 | | 1.0 | 1.0 | 1.0 | 1.0 |
| KBM425 | | | 2.0 | | | | |
| After 7 day curing | Tmax (MPa) | 1.7 | 1.9 | 2.0 | 1.5 | 2.0 | 1.9 |
| | Emax (%) | 60 | 50 | 40 | 80 | 20 | 50 |
| | Cohesive failure (%) | 100 | 100 | 100 | 100 | 100 | 100 |
| After 50 day immersion in 80° C water | Tmax (MPa) | 0.9 | 1.1 | 1.2 | 0.8 | 0.3 | 0.2 |
| | Emax (%) | 50 | 50 | 40 | 70 | 5 | 5 |
| | Cohesive failure (%) | 100 | 100 | 100 | 100 | 0 | 0 |
| Cure inhibition as visually inspected | | no | no | no | no | inhibited | no |

| | | | | | | | |
|---|---|---|---|---|---|---|---|
| Tmax: maximum tensile stress Emax: elongation under maximum load KBE903: trade name of γ-aminopropyltriethoxysilane, Shin-Etsu Chemical Co., Ltd. KBM403: trade name of γ-glycidoxypropyltrimethoxysilane, Shin-Etsu Chemical Co., Ltd. KBM425: trade name of the reaction product of β-aminoethylaminopropyltrimethoxysilane with γ-methacryloxypropyltrimethoxysilane, Shin-Etsu Chemical Co., Ltd. | | | | | | | |

The RTV organopolysiloxane compositions used in the invention invite no aminoxy cure inhibition and exhibit good adhesion in the presence of hot water and adhesion durability when coated or filled in joints and heated in the presence of moisture.

## Claims

1. The use, for sealing double-glazed panes, of a room temperature-curable organopolysiloxane composition comprising
(A) 100 parts by weight of diorganopolysiloxane capped with a hydroxyl group at both ends of the molecular chain,
(B) 5 to 500 parts by weight of calcium carbonate,
(C) 0.5 to 20 parts by weight of vinyloxysilane having the general formula (2): 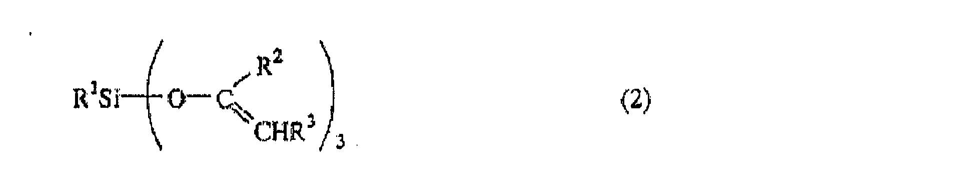 wherein R¹ is substituted or unsubstituted monovalent hydrocarbon group, R² and R³ are each hydrogen or substituted or unsubstituted monovalent hydrocarbon group, or a partial hydrolytic condensate of such vinyloxysilane;
(D) 0.01 to 10 parts by weight of metal-free curing catalyst selected from amine compounds and salts thereof, quaternary ammonium salts, dialkylhydroxylamines and guanidyl-containing silanes and siloxanes, and
(E) 0.1 to 20 parts by weight of a mixture and/or reaction product of a silane coupling agent having a primary amino group and a silanes coupling agent having a group selected from epoxy, acrylic and methacrylic groups.

2. A use according to claim 1 wherein the diorganopolysiloxane (A) has a viscosity in the range of 100 to 100,000 mPa.s and bears hydroxyl groups at both ends of its backbone and organic groups bonded to other silicon atoms, the organic groups being independently selected from C₁₋₂₀ alkyl groups, C₂₋₂₀ alkenyl groups, C₆₋₂₀ aryl groups and substituted forms of the foregoing groups in which one or more hydrogen atoms are substituted with halogen atom.

3. A use according to claim 1 or 2 wherein the calcium carbonate (B) is surface-treated colloidal calcium carbonate.

4. A use according to claim 1 or 2 wherein the calcium carbonate (B) is a mixture of surface-treated colloidal calcium carbonate and heavy calcium carbonate.

5. A use according to claim 4 wherein the heavy calcium carbonate is surface-treated heavy calcium carbonate.

6. A use according to any one of claim 1 to 5 wherein component (C) is vinyltriisopropenoxysilane or phenyltriisopropenoxysilane.

7. A use according to any one of the preceding claims in which component (D) is selected from hexylamine, dodecylamine phosphate, tetramethylguanidine, diazabicyclononane, benzyl triethylammonium acetate, dimethylhydroxylamine, diethylhydroxylamine, tetramethylguanidylpropyltrimethoxysilane, tetramethylguanidylpropylmethyldimethoxysilane and tetramethylguanidylpropyltris(trimethylsiloxy)silane.

8. A use according to any one of the preceding claims in which component (E) is a reaction product of
silane coupling agent having a primary amino group, selected from aminopropyltrimethoxysilane, aminopropyltriethoxysilane, N-β-(aminoethyl)-γ-aminopropyltrimethoxysilane, and N-β-(aminoethyl)-γ-aminopropyltriethoxysilane, with
silane coupling agent selected from β-(3,4-epoxycyclohexyl)ethyltrimethoxysilane, glycidoxypropyltrimethoxysilane, glycidoxypropylmethyldiethoxysilane, glycidoxypropyltriisopropenoxysilane, glycidoxypropylmethyldiisopropenoxysilane, acryloxypropyltrimethoxysilane and methacryloxypropyltrimethoxysilane,

9. A use according to any one of the preceding claims in which the organopolysiloxane composition additionally contains silicone resin selected from methylsilicone resin, methylvinylsilicone resin, methylphenylsilicone resin and methylphenylvinylsilicone resin, in an amount of 0.5 to 30 parts by weight per 100 parts by weight of component (A).

10. A double-glazed glass pane sealed with an organopolysiloxane composition as defined in any one of claims 1 to 9.

## Patentansprüche

1. Verwendung einer bei Raumtemperatur härtbaren Organopolysiloxan-Zusammensetzung, die Folgendes umfasst, zum Abdichten doppelt verglaster Scheiben:
(A) 100 Gewichtsteile Diorganopolysiloxan, verkappt mit einer Hydroxylgruppe an beiden Enden der Molekülkette,
(B) 5 bis 500 Gewichtsteile Calciumcarbonat,
(C) 0,5 bis 20 Gewichtsteile Vinyloxysilan der allgemeinen Formel (2): 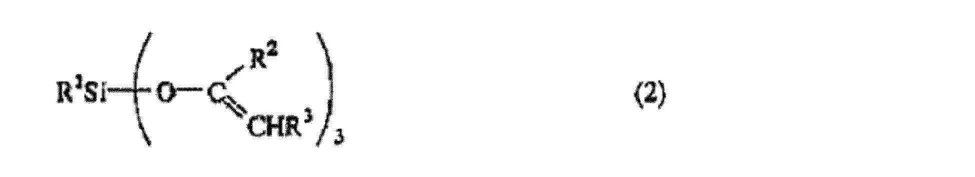 worin R¹ eine substituierte oder unsubstituierte einwertige Kohlenwasserstoffgruppe ist, R² und R³ jeweils Wasserstoff oder substituierte oder unsubstituierte einwertige Kohlenwasserstoffgruppen sind, oder eines partiellen hydrolytischen Kondensats eines solchen Vinyloxysilans;
(D) 0,01 bis 10 Gewichtsteile eines aus Aminverbindungen und Salzen davon, quaternären Ammoniumsalzen, Dialkylhydroxylaminen und Guanidyl enthaltenden Silanen und Siloxanen ausgewählten metallfreien Härtungskatalysators; und
(E) 0,1 bis 20 Gewichtsteile eines Gemischs und/oder Reaktionsprodukts aus einem Silanbindemittel mit einer primären Aminogruppe und einem Silanbindemittel mit einer aus Epoxy-, Acryl- und Methacrylgruppen ausgewählten Gruppe.

2. Verwendung nach Anspruch 1, worin das Diorganopolysiloxan (A) eine Viskosität im Bereich von 100 bis 100.000 mPa·s aufweist und Hydroxylgruppen an beiden Enden seiner Hauptkette sowie organische Gruppen, die an andere Siliciumatome gebunden sind, umfasst, wobei die organischen Gruppen jeweils unabhängig voneinander aus C₁₋₂₀-Alkylgruppen, C₂₋₂₀-Alkylgruppen, C₆₋₂₀-Arylgruppen und substituierten Formen der vorangegangenen Gruppen ausgewählt sind, wobei ein oder mehrere Wasserstoffatome durch ein Halogenatom substituiert sind.

3. Verwendung nach Anspruch 1 oder 2, worin das Calciumcarbonat (B) oberflächenbehandeltes kolloidales Calciumcarbonat ist.

4. Verwendung nach Anspruch 1 oder 2, worin das Calciumcarbonat (B) ein Gemisch aus oberflächenbehandeltem kolloidalem Calciumcarbonat und schwerem Calciumcarbonat ist.

5. Verwendung nach Anspruch 4, worin das schwere Calciumcarbonat oberflächenbehandeltes schweres Calciumcarbonat ist.

6. Verwendung nach einem der Ansprüche 1 bis 5, worin die Komponente (C) Vinyltriisopropenoxysilan oder Phenyltriisopropenoxysilan ist.

7. Verwendung nach einem der vorangegangenen Ansprüche, worin die Komponente (D) aus Hexylamin, Dodecylaminphosphat, Tetramethylguanidin, Diazabicydononan, Benzyltriethylammoniumacetat, Dimethylhydroxylamin, Diethylhydroxylamin, Tetramethylguanidylpropyltrimethoxysilan, Tetramethylguanidylpropylmethyldimethoxysilan und Tetramethylguanidylpropyltris(trimethylsiloxy)silan ausgewählt ist.

8. Verwendung nach einem der vorangegangenen Ansprüche, worin die Komponente (B) ein Reaktionsprodukt eines aus Aminopropyltrimethoxysilan, Aminopropyltriethoxysilan, N-β-(Aminoethyl)-γ-aminopropyltrimethoxysilan und N-β-(Aminoethyl)-γ-aminopropyltriethoxysilan ausgewählten Silanbindemittels mit einer primären Aminogruppe, mit einem aus β-(3,4-Epoxycyclohexyl)ethyltrimethoxysilan, Glycidoxypropyltrimethoxysilan, Glycidoxypropylmethyldiethoxysilan, Glycidoxypropyltriisopropenoxysilan, Glycidoxypropylmethyldiisopropenoxysilan, Acryloxypropyltrimethoxysilan und Methacryloxypropyltrimethoxysilan ausgewählten Silanbindemittel ist.

9. Verwendung nach einem der vorangegangenen Ansprüche, worin die Organopolysiloxanzusammensetzung zusätzlich dazu ein aus Methylsiliconharz, Methylvinylsiliconharz, Methylphenylsiliconharz und Methylphenylvinylsiliconharz ausgewähltes Siliconharz in einer Menge von 0,5 bis 30 Gewichtsteilen pro 100 Gewichtsteilen der Komponente (A) enthält.

10. Doppelt verglaste Scheibe, abgedichtet mit einer Organopolysiloxanzusammensetzung wie in einem der Ansprüche 1 bis 9 definiert.

## Revendications

1. Utilisation, pour sceller des panneaux à double vitrage, d'une composition d'organopolysiloxane durcissable à la température ambiante comprenant :
(A) 100 parties en poids de diorganopolysiloxane coiffé par un groupe hydroxyle aux deux extrémités de la chaîne moléculaire,
(B) 5 à 500 parties en poids de carbonate de calcium,
(C) 0,5 à 20 parties en poids de vinyloxysilane de formule générale (2) : 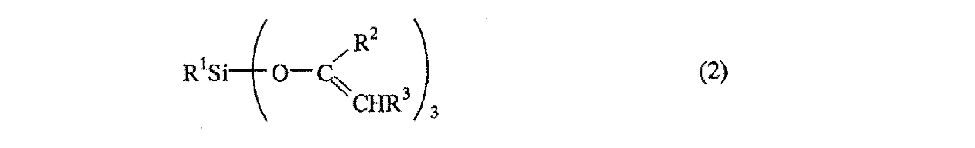 dans laquelle R¹ est un groupe hydrocarboné monovalent substitué ou non substitué, chacun de R² et R³ est l'hydrogène ou un groupe hydrocarboné monovalent substitué ou non substitué, ou d'un condensat hydrolytique partiel d'un tel vinyloxysilane ;
(D) 0,01 à 10 parties en poids d'un catalyseur de durcissement non métallique choisi parmi les composés amines et leurs sels, les sels d'ammonium quaternaire, les dialkylhydroxylamines et les silanes et siloxanes contenant un radical guanidyle, et
(E) 0,1 à 20 parties en poids d'un mélange et/ou d'un produit réactionnel d'un agent de couplage de type silane ayant un groupe amino primaire et d'un agent de couplage de type silane ayant un groupe choisi parmi les groupes époxy, acryliques, et méthacryliques.

2. Utilisation selon la revendication 1, dans laquelle le diorganopolysiloxane (A) a une viscosité située dans la plage allant de 100 à 100 000 mPa.s et porte des groupes hydroxyle aux deux extrémités de sa charpente et des groupes organiques liés à d'autres atomes de silicium, les groupes organiques étant indépendamment choisis parmi les groupes alkyle en C₁ à C₂₀, les groupes alcényle en C₂ à C₂₀, les groupes aryle en C₆ à C₂₀ et les formes substituées des groupes précédents dans lesquelles un ou plusieurs atomes d'hydrogène sont remplacés par des atomes d'halogène.

3. Utilisation selon la revendication 1 ou 2, dans laquelle le carbonate de calcium (B) est du carbonate de calcium colloïdal traité en surface.

4. Utilisation selon la revendication 1 ou 2, dans laquelle le carbonate de calcium (B) est un mélange de carbonate de calcium colloïdal traité en surface et de carbonate de calcium lourd.

5. Utilisation selon la revendication 4, dans laquelle le carbonate de calcium lourd est du carbonate de calcium lourd traité en surface.

6. Utilisation selon l'une quelconque des revendications 1 à 5, dans laquelle le composant (C) est le vinyltriisopropénoxysilane ou le phényltriisopropénoxysilane.

7. Utilisation selon l'une quelconque des revendications précédentes, dans laquelle le composant (D) est choisi parmi l'hexylamine, le phosphate de dodécylamine, la tétraméthylguanidine, le diazabicyclononane, l'acétate de benzyltriéthylammonium, la diméthylhydroxylamine, la diéthylhydroxylamine, le tétraméthylguanidylpropyltriméthoxysilane, le tétraméthylguanidylpropylméthyldiméthoxysilane et le tétraméthylguanidylpropyltris(triméthylsiloxy)silane.

8. Utilisation selon l'une quelconque des revendications précédentes, dans laquelle le composant (E) est le produit de la réaction
d'un agent de couplage de type silane ayant un groupe amino primaire, choisi parmi l'aminopropyltriméthoxysilane, l'aminopropyltriéthoxysilane, le N-β-(aminoéthyl)-γ-aminopropyltriméthoxysilane, et le N-β-(aminoéthyl)-γ-aminopropyltriéthoxysilane,
avec un agent de couplage de type silane choisi parmi le β-(3,4-époxycyclohexyl)éthyltriméthoxysilane, le glycidoxypropyltriméthoxysilane, le glycidoxypropylméthyldiéthoxysilane, le glycidoxypropyltriisopropénoxysilane, le glycidoxypropylméthyldiisopropénoxysilane, l'acryloxypropyltriméthoxysilane et le méthacryloxypropyltriméthoxysilane.

9. Utilisation selon l'une quelconque des revendications précédentes, dans laquelle la composition d'organopolysiloxane contient de plus une résine siliconée choisie parmi une résine de méthylsilicone, une résine de méthylvinylsilicone, une résine de méthylphénylsilicone et une résine de méthylphénylvinylsilicone, en une quantité de 0,5 à 30 parties en poids pour 100 parties en poids de composant (A).

10. Panneau de verre en double vitrage scellé avec une composition d'organopolysiloxane telle que définie dans l'une quelconque des revendications 1 à 9.
